# EUROPÄISCHE PATENTSCHRIFT

(11) **EP 0 810 152 B1**
(45) Veröffentlichungstag und Bekanntmachung des Hinweises auf die Patenterteilung: **28.02.2001**
(21) Anmeldenummer: 97250165.4
(22) Anmeldetag: 27.05.1997
(51) Int. Cl.: B63H 23/32, B63H 5/10, F16C 17/26, F16C 23/02

(54) **Lagerung für zwei gegenläufig angetriebene Wellen**
Bearing system for two contra-rotating shafts
Système de paliers pour deux axes contrarotatifs

(30) Priorität: 31.05.1996 DE 19623278
(43) Veröffentlichungstag der Anmeldung: 03.12.1997
(73) Patentinhaber: A. FRIEDR. FLENDER AG, D-46395 Bocholt (DE)
(72) Erfinder: Conrad, Georg, 78280 Guyancourt, Hameau de Bouviers (FR)
(74) Vertreter: Radünz, Ingo, Dipl.-Ing.

(56) Entgegenhaltungen:
- DE-A- 4 308 778
- US-A- 3 527 545
- US-A- 5 275 493
- US-A- 5 281 033
- PATENT ABSTRACTS OF JAPAN vol. 017, no. 459 (M-1467), 23. August 1993 & JP 05 105192 A (MITSUBISHI HEAVY IND LTD), 27. April 1993

## Beschreibung

Die Erfindung betrifft eine Lagerung für zwei gegenläufig angetriebene Wellen gemäß dem Gattungsbegriff des Hauptanspruches.

Es ist allgemein bekannt, daß der Wirkungsgrad von Propellerantrieben bei Schiffen, in Wasserturbinen und bei Flugzeugen durch die Verwendung von zwei gegenläufig angetriebenen Propeller wesentlich gesteigert werden kann. Eines der Probleme, um einen solchen Antrieb ohne Risiko betreiben zu können, liegt in der Lagerung zwischen den zwei konzentrisch gegenläufig angetriebenen Wellen.

Aus der US 3,527,545 ist für einen Schiffsantrieb eine solche Lagerung bekannt (siehe Fig. 12). Dieses Lager besteht aus einem üblichen geteilten Außengehäuse, das mit Lagerschalen versehen ist. In diesen Lagerschalen stützt sich eine glatte Hohlwelle ab. Innerhalb der Hohlwelle ist ein zweigeteiltes Innengehäuse drehfest angeordnet, das ebenfalls mit Lagerschalen versehen ist. In diesen Lagerschalen stützt sich eine glatte Innenwelle ab. Ein durch das Außengehäuse, die Lagerschale, die Hohlwelle bis zum Innengehäuse radial sich erstreckender Kanal sorgt für die ausreichende Schmierung zwischen Hohlwelle und Innengehäuse. Nachteilig bei dieser Lagerung ist, daß sie keine Axialverlagerung auffangen kann und empfindlich gegenüber Winkelverlagerungen ist. Winkelverlagerungen können zum einen durch die Biegelinien der Wellenstränge und überlagernd durch die elastische Verformung des Schiffskörpers bei schwerer See entstehen. Außerdem benötigt dieses Lager einen großen Längsbauraum, um die Flächenpressung in Grenzen zu halten. Die Einbaulage des Lagers ist durch die konstruktiven Gegebenheiten festgelegt.

Aufgabe der Erfindung ist es, eine Lagerung für zwei gegenläufig angetriebene Wellen anzugeben, die bei kurzer Längserstreckung Axialverlagerungen und große Radiallasten übertragen kann, unempfindlich gegen kleine Winkelverlagerungen ist und fertigungstechnisch konventionell herstellbar ist.

Diese Aufgabe wird mit den im kennzeichnenden Teil des Hauptanspruches angegebenen Merkmalen gelöst. Vorteilhafte Weiterbildungen sind Bestandteil von Unteransprüchen.

Kernpunkt der Erfindung ist die Ausbildung des Lagers als Kammlager, bestehend aus einem mit der Innenwelle fest verbundenen Innenläufer und einem mit der Hohlwelle fest verbundenen Außenläufer, die jeweils mindestens einen Tragsteg aufweisen. Dabei liegen die den Kamm bildenden Tragstege parallel zur Achse der Innen- bzw. Hohlwelle. Das erfindungsgemäße Lager kann man auch als Mehrflächen-Ringlager bezeichnen.

Die Vorteile dieser Lagerung können wie folgt zusammengefaßt werden.
- Durch das Mehrflächenprinzip und ein Nord-Süd"-Tragen ist die Flächenpressung sehr viel geringer im Vergleich zu konventionellen Gleitlagern.
- Die Längserstreckung der Lagerung ist geringer im Vergleich zu bekannten Gleitlagern.
- Zum Anfahren wird keine Hydrostatik benötigt.
- Die Lagerung läßt axiale Wellenverlagerungen (Ausdehnungen und Axialbewegungen) zu.
- Es werden keine axialen und radialen Anregungen verursacht.
- Die Lagerung ist unempfindlich gegenüber Axial- und Radialschwingungen.
- Durch die sehr geringe Breite der Gleitflächen und die geringen Flächenpressungen sind geringe Winkelverlagerungen aus den Biegelinien der Wellenstränge zulässig.
- Durch die axiale Ölzufuhr auf 360° sind auch hohe Drehzahlen möglich.
- Die Lagerung ist für alle Einbaulagen geeignet.
- Durch die geringen Flächenbelastungen kann die Drehzahldifferenz der beiden gegenläufig angetriebenen Wellen gering gehalten werden.

In der Zeichnung wird anhand eines Ausführungsbeispieles die erfindungsgemäße Lagerung näher erläutert. Es zeigen:
- Fig. 1: einen halbseitigen Längsschnitt durch ein erfindungsgemäß ausgebildetes Lager;
- Fig. 2: im vergrößerten Maßstab im gleichen Längsschnitt das Zusammenspiel der Tragstege;
- Fig. 3: im Längsschnitt die Einzelheiten der Schmiermittelzu- und -abfuhr.

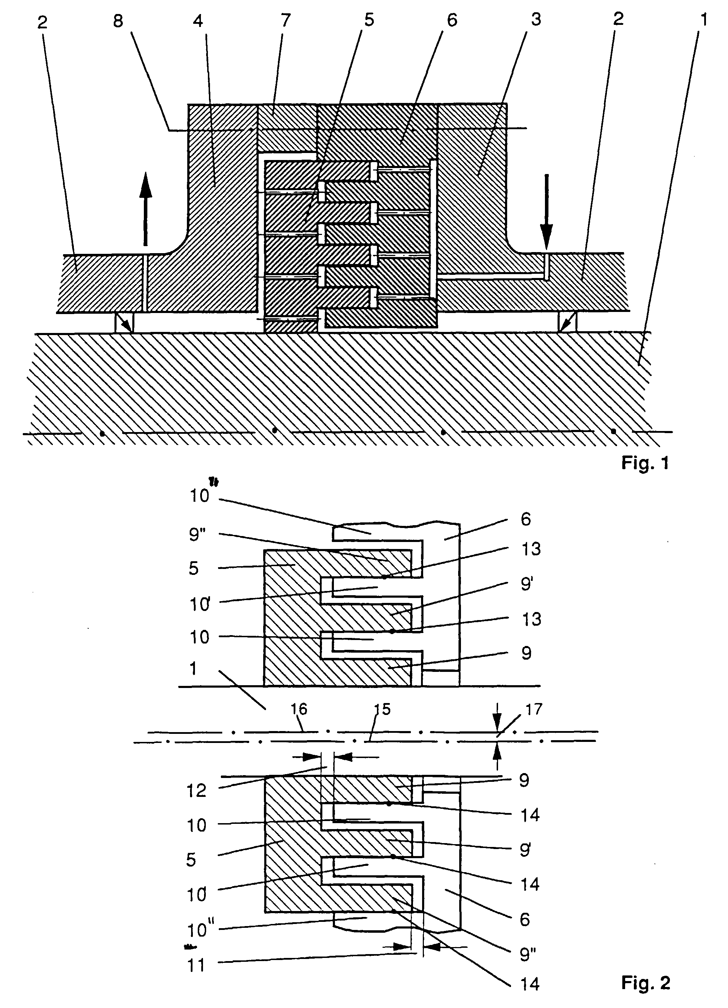

In Figur 1 ist in einem halbseitigen Längsschnitt ein erfindungsgemäß ausgebildetes Lager dargestellt. Für einen beliebigen Propellerantrieb (hier nicht dargestellt) werden zur Steigerung des Wirkungsgrades zwei gegenläufig angetriebene Wellen verwendet. Der eine Propeller wird mit der Innenwelle 1, in den meisten Fällen als Vollwelle ausgebildet, und der andere Propeller mit einer Hohlwelle 2 angetrieben, wobei die Hohlwelle 2 konzentrisch die Innenwelle 1 umfaßt. Im Bereich des Lagers weist die Hohlwelle 2 zwei Flansche 3, 4 auf, die im Abstand zueinander angeordnet sind. In dem Hohlraum zwischen den beiden Flanschen 3, 4 ist das erfindungsgemäß ausgebildete Lager angeordnet. Es besteht aus einem Innenläufer 5 und einem Außenläufer 6, die über Tragstege kammartig miteinander verzahnt sind. Einzelheiten dazu sind der Figur 2 zu entnehmen. Zwischen dem Außenläufer und dem in dieser Figur links liegenden Flansch 4 ist ein Zwischenring 7 angeordnet, der über mehrere nicht näher dargestellte Paßschrauben 8 mit dem Außenläufer 6 bzw. mit den beiden Flanschen 3, 4 verbunden ist.

In Figur 2 sind die Einzelheiten des erfindungsgemäß ausgebildeten Lagers dargestellt. Sowohl vom Innenläufer 5 als auch vom Außenläufer 6 erstrecken sich axial zueinander konzentrische Tragstege 9, 9', 9" bzw. 10, 10', 10", die kammartig miteinander verzahnt sind. Die Endbereiche der Tragstege 9 - 9" bzw. 10 - 10" weisen zur jeweiligen Innenwand des Innenläufers 5 bzw. Außenläufers 6 einen Abstand 11 bzw. 12 auf. Die Gleitflächen 13 bzw. 14 sind zur Verdeutlichung mit einem schwarzen Punkt markiert. Durch Präzision und eine elastische Nachgiebigkeit der Tragstege 9 - 9" bzw. 10 - 10" wird sichergestellt, daß alle Gleitflächen 13 bzw. 14 gleichmäßig tragen, so daß ein Mehrflächenprinzip sich einstellt und auf diese Weise die Flächenpressung reduziert wird. Hinzu kommt, daß zwischen der Rotorachse 15 des Innenläufers 5 und der Rotorachse 16 des Außenläufers 6 ein Radialspiel 17 eingestellt wird. In dieser Darstellung ist aus Gründen der Kenntlichmachung das Radialspiel 17 übertrieben dargestellt. Verständlicher ist es, dieses Radialspiel als relatives Lagerspiel ϕ auszudrücken, wobei ϕ = (D-d)/d ist mit D = Lagerdurchmesser und d = Wellendurchmesser. Dieses Verhältnis liegt in der Größenordnung von 0,5 - 2‰. Durch dieses Spiel 17 stellt sich ein sogenanntes "Nord-Süd"-Tragen ein, d. h. im oberen Teil gleitet die Innenfläche des jeweiligen Tragsteges 9 - 9'' des Innenläufers 5 auf der Außenfläche des jeweiligen Tragsteges 10 - 10'' des Außenläufers 6 und im unteren Teil ist es genau umgekehrt. Der Außenläufer 6 trägt den Innenläufer 5 über und unter den Rotationsachsen.

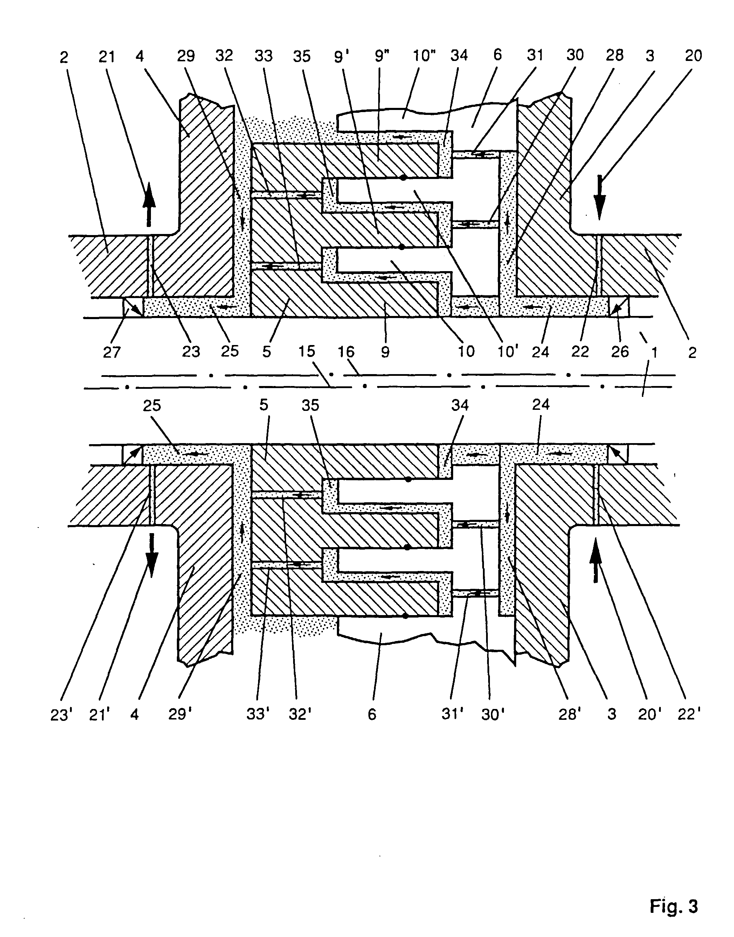

Figur 3 zeigt die Einzelheiten des Schmiersystems im erfindungsgemäß ausgebildeten Lager. Die Zufuhr 20 bzw. Abfuhr 21 des Schmiermittels erfolgt axial durch jeweils radial in der Hohlwelle 2 angeordnete Bohrungen 22, 22', 23, 23'. Diese Bohrungen 22, 22', 23, 23' münden in einem Ringraum 24, 25, der gebildet wird durch die Innenwelle 1 und der radial im Abstand dazu angeordneten Hohlwelle 2. Die Abdichtung des jeweiligen Ringraumes 24, 25 nach rechts bzw. nach links erfolgt über eine Wellendichtung 26, 27. Für die Verteilung in radialer Richtung sind zum einen im Außenläufer 6 radial verlaufende Kanäle 28, 28' und im Innenläufer 5 radial verlaufende Kanäle 29, 29' angeordnet. Von diesen Hauptkanälen 28, 28' bzw. 29, 29' erstrecken sich axial Abzweigungen 30, 30', 31, 31', 32, 32', 33, 33'. Diese Querkanäle 30 - 33' münden in den Ringräumen 34, 35 zwischen der Stirnseite des jeweiligen Tragsteges 9 - 9' bzw. 10 - 10'' und der jeweiligen Innenwand des Innenläufers 5 bzw. Außenläufers 6. Die zuvor beschriebene Verteilung des Schmiermittels garantiert eine 360°-Schmierung, die bei gegenläufig angetriebenen Wellen 1, 2 von entscheidender Bedeutung für die hydrostatische bzw. hydrodynamische Trennung der Gleitflächen 13, 14 ist.

## Patentansprüche

1. Lagerung für zwei gegenläufig angetriebene Wellen, wobei eine als Innenwelle und die andere als konzentrisch zur Innenwelle geführte Hohlwelle ausgebildet ist, bestehend aus mindestens einem beide Wellen konzentrisch führenden und mit einer Zentralschmierung verbundenen Gleitlager,
dadurch gekennzeichnet,
daß das Gleitlager als Kammlager ausgebildet ist, das aus einem mit der Innenwelle (1) fest verbundenen und mindestens einen Tragsteg (9 - 9'') aufweisenden Innenläufer (5) und einen mit der Hohlwelle (2) fest verbundenen und mindestens einen Tragsteg (10 - 10") aufweisenden Außenläufer (6) besteht und der Außenläufer mit der im Lagerbereich flanschartig (3, 4) ausgebildeten Hohlwelle (2) verbunden ist, wobei die kammartig ineinandergreifendenTragstege (9 - 9'', 10 - 10") und die Gleitflächen (13, 14) axial voneinander beabstandet sind und hydrostatisch / hydrodynamisch getrennt sind und parallel zur Achse der Innenwelle (1) bzw. Hohlwelle (2) liegen.

2. Lagerung nach Anspruch 1,
dadurch gekennzeichnet,
daß insgesamt mehrere miteinander kämmende konzentrische Tragstege (9 - 9'', 10 - 10'') des Innenläufers (5) bzw. des Außenläufers (6) vorgesehen sind, deren radiale Erstreckung so gewählt ist, daß sie einen elastisch nachgiebigen Kragträger bilden.

3. Lagerung nach Anspruch 1 und 2,
dadurch gekennzeichnet,
daß der Innenläufer (5) bzw. der Außenläufer (6) aus zwei gleichartigen Halbschalen zusammengesetzt ist.

4. Lagerung nach einem der Ansprüche 1 bis 3,
dadurch gekennzeichnet,
daß der Innenläufer (5) bzw. der Außenläufer (6) aus Stahl ist.

5. Lagerung nach Anspruch 4,
dadurch gekennzeichnet,
daß die Gleitflächen der Tragstege (9 - 9'') des Innenläufers (5) beschichtet sind.

6. Lagerung nach Anspruch 5,
dadurch gekennzeichnet,
daß das Beschichtungsmaterial Kupfer ist.

7. Lagerung nach Anspruch 5,
dadurch gekennzeichnet,
daß das Beschichtungsmaterial Zinn ist.

8. Lagerung nach Anspruch 5,
dadurch gekennzeichnet,
daß das Beschichtungsmaterial Teflon ist.

9. Lagerung nach einem der Ansprüche 1 bis 3,
dadurch gekennzeichnet,
daß der Innenläufer (5) aus Massivbronze gefertigt ist.

10. Lagerung nach einem der Ansprüche 1 bis 9,
dadurch gekennzeichnet,
daß zwischen den Hohlwellenflanschen (3, 4) ein geteilter Zwischenring (7) angeordnet ist.

11. Lagerung nach Anspruch 10,
dadurch gekennzeichnet,
daß der Zwischenring (7) eine radial verlaufende und verschließbare Entlüftungsbohrung aufweist.

12. Lagerung nach einem der Ansprüche 1 - 11,
dadurch gekennzeichnet,
daß alle Tragstege (9 - 9'', 10 - 10") und insbesondere die Gleitflächen (13, 14) durch entsprechend angeordnete Kanäle (28, 28', 29, 29', 30, 30', 31, 31', 32, 32', 33, 33') auf 360° mit einem unter Druck stehenden Schmiermittel in Verbindung stehen.

13. Lagerung nach Anspruch 12,
dadurch gekennzeichnet,
daß die Zu- und Abfuhr des Schmiermittels durch jeweils eine radial durch die Hohlwelle (2) sich erstreckende Bohrung (22, 22', 23, 23') erfolgt und der mit Schmiermittel gefüllte Ringraum (24, 25) zwischen Innenwelle (1) und Hohlwelle (2) nach beiden Seiten (26, 27) hin abgedichtet ist und für die Weiterleitung des Schmiermittels vom Ringraum (24) durch den Außenläufer (6) bzw. Innenläufer (5) sich entsprechende sowohl radial als auch axial liegende Kanäle (28 - 33') angeordnet sind, die in dem durch den axialen Abstand der Tragstege (9, 9'', 10, 10") sich jeweils ergebenden Ringraum (34, 35) münden bzw. davon wegführen.

14. Lagerung nach einem der Ansprüche 1 - 13,
dadurch gekennzeichnet,
daß die Rotationsachse (15) des Innenläufers (5) zur Rotationsachse (16) des Außenläufers (6) ein Radialspiel (17) aufweisen.

## Claims

1. Bearing for two shafts driven in opposite sense, wherein one is constructed as an inner shaft and the other as a hollow shaft guided concentrically to the inner shaft, consisting of at least one slide bearing concentrically guiding both shafts and connected with a central lubrication, characterised in that the slide bearing is constructed as a comb bearing which consists of an inner slide member (5) fixedly connected with the inner shaft (1) and having at least one support web (9'-9") and an outer slide member (6) fixedly connected with the hollow shaft (2) and having at least one support web (10-10") and the outer slide member is connected with the hollow shaft (2), which is constructed to be flange-like (3, 4) in the bearing region, wherein the support webs (9-9", 10-10") interengaging in comblike manner and the slide surfaces (13, 14) are axially spaced apart and hydrostatically/hydrodynamically separated and lie parallel to the axis of the inner shaft (1 ) or hollow shaft (2).

2. Bearing according to claim 1, characterised in that in total several intermeshing concentric support webs (9-9", 10-10") of the inner slide member (5) and outer slide member (6), respectively, are provided, the radial extent of which is so selected that they form an elastically yielding cantilever beam.

3. Bearing according to claim 1 and 2, characterised in that the inner slide member (5) or the outer slide member (6) is composed of two identical half shells.

4. Bearing according to one of claims 1 to 3, characterised in that the inner slide member (5) or outer slide member (6) is made of steel.

5. Bearing according to claim 4, characterised in that the slide surfaces of the support webs (9-9") of the inner slide member (5) are coated.

6. Bearing according to claim 5, characterised in that the coating material is copper.

7. Bearing according to claim 5, characterised in that the coating material is tin.

8. Bearing according to claim 5, characterised in that the coating material is 'Teflon'.

9. Bearing according to one of claims 1 to 3, characterised in that the inner slide member (5) is made of solid bronze.

10. Bearing according to one of claims 1 to 9, characterised in that a divided intermediate ring (7) is arranged between the hollow shaft flanges (3, 4).

11. Bearing according to claim 10, characterised in that the intermediate ring (7) has a radially extending and closable ventilating bore.

12. Bearing according to one of claims 1 to 11, characterised in that all support webs (9-9", 10-10") and particularly the slide surfaces (13, 14) are connected by correspondingly arranged channels (28, 28', 29, 29', 30, 30', 31, 31', 32, 32', 33, 33') over 360° with lubricant standing under pressure.

13. Bearing according to claim 12, characterised in that the feed and removal of the lubricant is effected each time through a bore (22, 22', 23, 23') extending radially through the hollow shaft (2) and the annular space (24, 25), which is filled with lubricant, between inner shaft (1 ) and hollow shaft (2) is sealed off to both sides (26, 27) and channels (28-33'), which correspondingly lie both radially and axially and open into or lead away from the annular space (34, 35) respectively resulting from the axial spacing of the support webs (9, 9", 10, 10"), are arranged for the conducting onward of the lubricant from the annular space (24) through the outer slide member (6) or inner slide member (5).

14. Bearing according to one of claims 1 to 13, characterised in that the rotational axis (15) of the inner slide member (5) has a radial play (17) relative to the rotational axis (16) of the outer slide member (6).

## Revendications

1. Système de palier pour deux arbres entraînés en sens contraire. Un arbre se présente sous forme d'arbre intérieur et l'autre, sous forme d'arbre creux guidé de manière concentrique par rapport à l'arbre intérieur. Ce système de palier comprend au moins un palier lisse guidant les deux arbres de manière concentrique relié à un système de graissage centralisé. Ce système de palier est caractérisé en ce que le palier lisse se présente sous forme de palier à cannelures comprenant un rotor intérieur (5) solidarisé de manière fixe à l'arbre intérieur (1 ) et comportant au moins une entretoise support (9 à 9"), ainsi qu'un rotor extérieur (6) solidarisé de manière fixe à l'arbre creux (2) et comprenant au moins une entretoise support (10 à 10"). Le rotor extérieur est relié à l'arbre ceux (2) se présentant sous forme de flasque (3,4) dans la zone du palier. Les entretoises support (9 à 9", 10 à 10") s'engrènent en peigne et les surfaces de glissement (13,14) sont à distance les unes des autres dans le sens axial. Elles sont séparées de manière hydrostatique/hydrodynamique et sont parallèles à l'axe de l'arbre intérieur (1) et de l'arbre creux (2).

2. Système de palier selon la revendication 1, caractérisé en ce qu'il est prévu en tout plusieurs entretoises support (9 à 9", 10 à 10") du rotor intérieur (5) et du rotor extérieur (6) qui sont concentriques et s'engrènent, et dont l'extension radiale est sélectionnée de manière à former un support en porte-à-faux à déformation élastique.

3. Système de palier selon les revendications 1 et 2 caractérisé en ce que le rotor intérieur (5) et le rotor extérieur (6) se composent de deux semi-coques similaires.

4. Système de palier selon l'une quelconque des revendications 1 à 3 caractérisé en ce que le rotor intérieur (5) et le rotor extérieur (6) sont en acier.

5. Système de palier selon la revendication 4 caractérisé en ce que les surfaces de glissement des entretoises support (9 - 9") du rotor intérieur (5) sont munies d'un revêtement.

6. Système de palier selon la revendication 5 caractérisé en ce que le matériau de revêtement est du cuivre.

7. Système de palier selon la revendication 5 caractérisé en ce que le matériau de revêtement est de l'étain.

8. Système de palier selon la revendication 5 caractérisé en ce que le matériau de revêtement est du Téflon.

9. Système de palier selon l'une quelconque des revendications 1 à 3 caractérisé en ce que le rotor intérieur (5) est en bronze massif.

10. Système de palier selon l'une quelconque des revendications 1 à 9 caractérisé en qu'une bague intermédiaire (7) segmentée est placée entre les flasques des arbres creux (3,4).

11. Système de palier selon la revendication 10 caractérisé en ce que la bague intermédiaire (7) présente un orifice de ventilation s'étendant dans le sens radial et pouvant être obturé.

12. Système de palier selon l'une quelconque des revendications 1 à 11 caractérisé en ce que toutes les entretoises support (9 à 9", 10 à 10") et notamment les surfaces de glissement (13, 14) communiquent par des canaux (28, 28', 29, 29', 30, 30', 31, 31', 32, 32', 33, 33') disposés de ce fait à 360°, avec un lubrifiant sous pression.

13. Système de palier selon la revendication 12 caractérisé en ce que l'alimentation et l'évacuation du lubrifiant interviennent dans chaque cas par l'alésage (22, 22', 23, 23') s'étendant à travers l'arbre creux (2). L'espace annulaire (24,25) rempli de lubrifiant est rendu étanche vis-à-vis des deux faces (26, 27), entre l'arbre intérieur (1) et l'arbre creux (2). Afin de poursuivre l'acheminement du lubrifiant depuis l'espace annulaire (24) à travers le rotor extérieur (6) et le rotor intérieur (5), sont prévus des canaux (28 à 33') en correspondance, s'étendant aussi bien dans le sens radial que dans le sens axial et débouchant dans l'espace annulaire (34, 35) formé dans chaque cas par l'écart axial des entretoises support (9 à 9", 10 à 10") et partant dudit espace annulaire.

14. Système de palier selon l'une quelconque des revendications 1 à 13 caractérisé en ce que l'axe de rotation (15) du rotor intérieur (5) présente un jeu radial (17) par rapport à l'axe de rotation (16) du rotor extérieur (6).
